# EUROPEAN PATENT APPLICATION

(11) **EP 4 656 036 A1**
(43) Date of publication of application: **03.12.2025**
(21) Application number: 24179260.5
(22) Date of filing: 31.05.2024
(51) Int. Cl.: A01G 24/23, A01G 24/44, A01G 9/029

(54) **PLANT GROWTH MEDIUM BASED ON PLANT FIBERS**

(71) Applicant: Groworld ApS, 4600 Køge (DK)
(72) Inventor: LARSEN, Gert, 2000 Frederiksberg (DK); CHRISTENSEN, Svend J, 2000 Frederiksberg (DK)
(74) Representative: Zacco Denmark A/S

(57) **Abstract**

The present invention relates to a plant growth medium comprising plant fibers having a reduced content of lignin as compared to the plant material from which they are formed and to a block formed plant growth medium comprising the plant growth medium and a biodegradable binder. Further the invention relates to processes for the manufacture of the plant growth medium and the block formed plant growth medium, and to the use thereof for growing plants, e.g. in horticulture and agriculture.

## Description

### Technical field of the invention

The present invention generally relates to the fields of horticulture, agriculture, plant and wood fiber products and processes for the manufacture of same. Specifically the invention relates to a plant growth medium which is compostable, biodegradbale and suitable for use in e.g. hydroponic growth systems or in fields for the manufacture of plants such as vegetables and potted plants.

### Background of the invention

For production in horticulture, sphagnum has traditionally been used for pot production and various matting media based on stone wool, glass wool, coconut fiber etc. for vegetable production of tomatoes, cucumbers, peppers, etc.

Growth media from sphagnum bogs have been widely used for growing plants both in private and professional areas. Traditionally, these growth media have been harvested in sphagnum bogs and marketed with the addition of various fertilisers, minerals etc. for improving garden soils and for various purposes in production horticulture. The harvest from the sphagnum bogs has taken place for over 100 years and was intensified especially in the latter half of the 20th century. With the increasing focus on CO2 emissions in connection with climate change, there has been increasing attention to the importance of sphagnum bogs for the uptake and storage of CO2. Worldwide, the sphagnum bogs cover only about 3% of the land mass on Earth, but they are estimated to contain about 30% of the bound CO2. Harvesting and use of sphagnum therefore greatly affects CO2 emissions. For example, Sweden's production of sphagnum growth media emits twice as much CO2 as the entire country's emissions from the transport sector.

Cultivation mats based on rock wool or glass wool have also been used for cultivation of various plants in e.g. horticulture for many years. However, in the mid-2010s these cultivation mats based on rock wool or glass wool have been found to have a relatively large climate footprint. Furthermore cultivation mats based on rock wool or glass wool present a waste handling and disposal issue once they have been spent since they are not compostable nor flammable and thus not easily recycled. Lastly, rock wool is a hazardous substance to work with.

In the late 1990s plant growth medium based on pumice, clays, etc. were developed by Groworld as a natural alternative to rock wool, which has been used in nurseries and green roof tops.

Therefore, there is an imminent need for finding alternatives to sphagnum and rock/glass wool products in the industry. One of the candidates to replace sphagnum has been products from especially conifers in various forms, e.g. wood fiber, wood chips, etc. In most of the products that have been developed, the manufacturers mix the wood fibers with various other products such as sphagnum, compost etc. However, wood fiber-based growth media are phytotoxic, i.e. toxic to plants with delayed germination, poor root formation, reduction of plant growth, discoloration of leaves, etc.

Hence there is a need for new plant growth media in the industry which support the germination, root formation and growth of plants, while at the same time being biodegradable, having a low carbon footprint and being sufficiently inexpensive.

EP1457107B3 discloses the use of a plant growth medium consisting of lignocellulose fibres at least partially coated with lignin in the cultivation of plants. The type of lignin is not specified, either are there any working examles illustrating this.

US2020/0352118A1 discloses a hydroponic growth medium comprising 2-10% of a man-made fiber portion and 90-98% of a natural fiber portion having wood fiber.

US2020/0299208A1 discloses a compressed horticultural slab comprising a substrate including fibers, where the slab has different dimensions at different moisture content. The slab may contain wood fibers.

US2021/0212273A1 discloses a horticultural slab being free from synthetic fibers and comprising heat-treated natural fibers and having channels extending into the slab.

US2022/0356401'a1 discloses a growing medium comprising 5-95% fibrous tree bark, 5-95% fibrous wood components and at least one fertilizer, macronutrient, soil, seed etc.

### Summary of the invention

It is an object of the present invention to provide plant fiber based growth media for horticulture and agriculture which support the germination, root formation and growth of plants, where the plant fiber growth media have a low CO2 footprint and are entirely biodegradable such that their use in horticulture and agriculture is easy without much effort to dispose of spent plant growth media.

It is also an object of the present invention to provide plant fiber based growth media wherein the fibers are bound together by a biodegradable binder, so that the residual products after use can be included in the circular bioeconomy.

In spite of wood fiber-based growth media being phytotoxic and only poorly supporting germination, root formation and plant growth, the present inventors have surprisingly discovered ways to modify plant and wood fibers such that they support germination, root formation and plant growth just alike sphagnum based products. The solution to the problem of having wood fibers to support plant growth is based on partially removing components from the wood fibers and/or adding components to the wood fibers. Without wishing to be bound by theory the effect of these modifications appear to be to shield the plants, roots and seeds from some of the lignin components present in unmodified plant fibers, such as wood fibers.

Through countless experiments with wood fiber in different shapes, sizes, from different production methods, from different suppliers, the inventors observed the phytotoxicity appearing due to the presence of lignin at growth points during germination and root growth. Experiments with cut flower plants showed that water containing lignin is phytotoxic.

The present invention thus provides in a first aspect a plant growth medium comprising plant fibers which have a reduced content of lignin as compared to the plant material from which they are formed.

The present invention provides in a second aspect a plant growth medium comprising plant fibers and at least one cellulose product.

In one embodiment the plant growth medium comprises plant fibers whereto at least one cellulose product is bound to the surface of said plant fibers.

Hence, the advantage of using plant fibers having a reduced content of lignin is in direct contrast to, and surprising in view of, the proposal in EP1457107B3 where lignocellulose fibers are coated with lignin, i.e. lignin is added to the fibers.

The present invention provides in a third aspect a block formed plant growth medium (BFPGM) comprising the plant growth medium as defined above and a biodegradable binder.

In an embodiment the biodegradable binder is a synthetic biodegradation-enhanced fiber comprising polyester and a monosaccharide at least partially contained within the polyester.

The present invention provides in a fourth aspect a process for the manufacture of the plant growth medium as defined above, comprising : providing plant fibers, slurrying the plant fibers in an aqueous solution to obtain a slurry, incubating the slurry at a temperature above room temperature, optionally under the action of UV, ozone or enzymes, allowing at least part of the lignin to dissolve or liberate from the plant fibers, draining or filtering the aqueous phase from the slurry of plant fibers to obtain processed fibers, optionally washing the processed fibers and/or removing larger parts, optionally mixing of the processed fibers and the at least one cellulose product, and optionally drying of processed fibers or the mixture of processed fibers and at least one cellulose product to obtain said plant growth medium.

The present invention provides in a fifth aspect a process for the manufacture of the plant growth medium as defined above, comprising the consecutive steps :
a) providing plant fibers,
b) slurrying the plant fibers in an aqueous solution to obtain a slurry,
c) incubating the slurry at a temperature above room temperature allowing at least part of the lignin to dissolve or liberate from the the plant fibers, optionally under the action of UV, ozone or enzymes,
d) draining or filtering the aqueous phase from the slurry of plant fibers to obtain processed fibers,
e) optionally washing the processed fibers and/or removing larger parts,
f) optionally mixing of the processed fibers and the at least one cellulose product,
g) optionally drying of the mixture,
to obtain said plant growth medium.

The present invention provides in a sixth aspect a process for the manufacture of the plant growth medium as defined above, comprising mixing of the plant fibers and the at least one cellulose product, and subsequently heating the mixture, such as heating the mixture to at least 50 °C.

The present invention provides in a further aspect a process for the manufacture of the BFPGM as defined above, comprising : preparing a plant growth medium by the process as defined above, mixing the plant growth medium with a biodegradable binder, forming the mixture into the 3 dimensional shape of the desired BFPGM and activating the reaction causing the biodegradable binder to transform such as to be able to support said outer shape.

The present invention provides in a further aspect a use of the plant growth medium as defined above or the BFPGM as defined above for growing a plant.

The present invention provides in a further aspect a use of the plant growth medium as defined above or the BFPGM as defined above in horticulture, agriculture or the consumer market.

The present invention provides in a further aspect a method for growing plants which comprises the steps:
a) providing the plant growth medium as defined herein or the BFPGM as defined herein,
b) sowing seeds and/or placing seedlings on or into said plant growth medium or said BFPGM, and
c) adding water and nutrients as required for growth of the plants to said plant growth medium or said BFPGM during the growth of said plants.

The present invention is further illustrated by the follow items:
1. Plant growth medium comprising plant fibers having a reduced content of lignin as compared to the plant material from which they are formed.
2. Plant growth medium comprising plant fibers and at least one cellulose product.
3. The plant medium according to any one of the preceding items, wherein said plant fibers have a content of lignin of less than 25.0 %w/w, less than 20 %w/w, less than 15.0 %w/w, less than 10.0 %w/w, less than 8.0 %w/w, less than 5.0 %w/w or less than 2.0 %w/w.
4. The plant growth medium according to any one of the preceding items, wherein said plant fibers have a content of lignin in the range from 15 %w/w to 25 %w/w, from 12 %w/w to 25 %w/w, from 10 %w/w to 25%w/w, from 15 %w/w to 30 %w/w, from 10 %w/w to 30 %w/w, from 5 %w/w to 20%w/w or from 5 %w/w to 15%w/w.
5. The plant growth medium according to any one of the preceding items, wherein said plant fibers have a content of lignin which is reduced by 10 % as compared to the plant from where the fibers originate, such as reduced by 20%, 33%, 40%, 50% or 75% as compared to the plant from where the fibers originate.
6. The plant growth medium according to any one of the preceding items, wherein the content of lignin has been reduced by the use of ultraviolet (UV) light, ozone or enzymes.
7. The plant growth medium according to any one of the preceding items, wherein the content of lignin has been reduced by the use of UV light.
8. The plant growth medium according to any one of the preceding items, wherein the content of lignin has been reduced by the use of ozone.
9. The plant growth medium according to any one of the preceding items, wherein the content of lignin has been reduced by the use of enzymes.
10. The plant growth medium according to any one of the preceding items, wherein the content of lignin has been reduced by a hydrothermal process followed by draining the aqueous phase containing lignin and remnants thereof.
11. The plant growth medium according to item 10, where said hydrothermal process is an acidic hydrothermal process.
12. The plant growth medium according to item 10, where said hydrothermal process is an alkaline hydrothermal process.
13. The plant growth medium according to any one of items 10-12, where said hydrothermal process comprises heating to a temperature in the range from 50°C to 100 °C at atmospheric pressure for at least 5 minutes.
14. The plant growth medium according to any one of the preceding items, wherein said plant fibers having a reduced content of lignin have been flushed with hot water.
15. The plant growth medium according to any one of the preceding items, wherein the content of said plant fibers is at least 50% w/w, at least 60 %w/w, at least 70 %w/w, at least 80 %w/w, at least 90 %w/w or at least 95 %w/w.
16. The plant growth medium according to any one of the preceding items, wherein the content of lignin in said plant fibers have been reduced after the making of the plant fibers.
17. The plant growth medium according to any one of the preceding items, comprising no sphagnum or peat.
18. The plant growth medium according to any one of the preceding items , wherein said at least one cellulose product is bound to the surface of said plant fibers.
19. The plant growth medium according to any one of the preceding items, wherein said at least one cellulose product is bound exclusively to the surface of said plant fibers.
20. The plant growth medium according to any of the preceding items, wherein said at least one cellulose product is a cellulose, cellulose ether, a cellulose ester or a mixture thereof.
21. The plant growth medium according to any one of the preceding items, wherein said at least one cellulose product is selected from the group consisting of microfiber cellulose (MFC), powdered cellulose, microcrystalline cellulose (MCC), methyl cellulose (MC), hydroxypropyl cellulose (HPC), hydroxypropylmethyl cellulose (HPMC), carboxymethyl cellulose (CMC) and a mixture thereof.
22 The plant growth medium according to any one of the preceding items, wherein said at least one cellulose product is microfiber cellulose (MFC).
23. The plant growth medium according any one of the preceding items, wherein said at least one cellulose product is carboxymethyl cellulose (CMC).
24. The plant growth medium according to any one of the preceding items, wherein the content of said at least one cellulosic product in the plant growth medium is from 0.01 %w/w to 20 %w/w, from 0.1 %w/w to 20 %w/w, from 0.5 %w/w to 10 %w/w, from 0.5 %w/w to 5 %w/w or from 1.0 %w/w to 10 %w/w.
25. The plant growth medium according to any of the preceding items further comprising at least one water holding ion exchange material.
26. The plant growth medium according to item 25, wherein the at least one water holding ion-exchange material comprises zeolite, clay minerals, diatomaceous earth or a mixture thereof.
27. The plant growth medium according to item 25 or 26, wherein said at least one water holding ion-exchange material is a zeolite.
28. The plant growth medium according to any one of the items 25-27, wherein said at least one water holding ion-exchange material is clay minerals.
29. The plant growth medium according to any one of the items 25-28, wherein said at least one water holding ion-exchange material is diatomaceous earth.
30. The plant growth medium according to any one of the items 25-29, wherein the content of said at least one water holding ion-exchange material is in the range from 0.05 %w/w to 30 %w/w, in the range from 0.5 %w/w to 20 %w/w or in the range from 1 %w/w to 10 %w/w.
31. The plant growth medium according to any one of the items 25-30, wherein the at least one water holding ion-exchange material has an average particle size of less than 3.0 mm, less than 1.0 mm, less than 0.50 mm or less than 0.20 mm.
32. The plant growth medium according to any one of the preceding items, wherein said plant fibers are from an angiosperm or from a gymnosperms.
33. The plant growth medium according to any one of the preceding items, wherein said plant fibers are from a dicot or from a monocot.
34. The plant growth medium according to any one of the preceding items, wherein said plant fibers are from trees.
35. The plant growth medium according to item 34, wherein said trees are spruce (Picea).
36. The plant growth medium according to item 34, wherein said trees are pine (Pinus).
37. The plant growth medium according to any one of items 1-33, wherein said plant fibers are from angiosperms.
38. The plant growth medium according to any one of items 1-33, wherein said plant fibers are from plants selected from the group consisting of hemp, sun flower, rapeseed, corn, wheat and barley.
39. The plant growth medium according to any one of the preceding items, wherein said plant fibers are obtained from plants by the use of a mechanical process such as tearing, rolling or hammer milling.
40. The plant growth medium according to any one of the preceding items, wherein said plant fibers are obtained from plants without the use of chemical or biochemical processes for disintegrating the plant material into the plant fibers.
41. The plant growth medium according to any one of the preceding items, wherein said plant fibers are initially obtained from plants without the use of chemical or biochemical processes for disintegrating the plant material into the plant fibers prior to reducing the lignin content of said plant fibers.
42. Block formed plant growth medium (BFPGM) comprising the plant growth medium as defined in any one of items 1-41 and a biodegradable binder.
43. The BFPGM according to item 42, wherein said biodegradable binder exhibits at least 80% biological degradation in 650 days under ASTM D5511 test conditions (filling dump conditions).
44. The BFPGM according to item 42 or 43, wherein said biodegradable binder exhibits at least 50% biological degradation in 980 days under ASTM D6691 test conditions (sea environment).
45. The BFPGM according to any one of items 42-44, wherein said biodegradable binder exhibits at least 15% biological degradation in 250 days under ASTM D5210 test conditions (waste water environment).
46. The BFPGM according to any one of items 42-45, wherein said biodegradable binder is degraded in nature by hydro-degradation, i.e. a degradation fully decomposing the binder to natural elements such as water, carbon dioxide, methane and humus without leaving traces of the polymer.
47. The BFPGM according to any one of items 42-46, wherein said biodegradable binder is a synthetic biodegradation-enhanced fiber comprising a polymer material, one or more biodegradation additives at least partially contained within the polymer material that enhance the biodegradation rate of the polymer material in a biodegradation environment, said biodegradation additives comprising at least one of an aliphatic-aromatic ester, a polylactide, a monosaccharide, an aldohexose and a ketohexose.
48. The BFPGM according to item 47, wherein the biodegradation additive comprises a monosaccharide.
49. The BFPGM according to item 47 or 48, wherein the biodegradable binder comprises a polymer material which is polyester, such as polyethylene terephthalate.
50. The BFPGM according to any one of items 42-49, biodegradable binder is a synthetic biodegradation-enhanced fiber comprising polyester and a monosaccharide at least partially contained within the polyester.
51. The BFPGM according to any one of items 47-50, wherein said synthetic biodegradation-enhanced fiber comprises a silicon coating extending about the polymer material and biodegradation additives.
52. The BFPGM according to any one of items 47-51, wherein said polymer material and said biodegradation additives are coupled at high temparatures and extruded to form the synthetic biodegradation-enhanced fiber.
53. The BFPGM according to any one of items 42-52, wherein the content of said biodegradable binder is in the range from 0.1 %w/w to 15 %w/w, from 0.1 %w/w to 8 %w/w or from 0.5%w/w to 5 %w/w.
54. The BFPGM according to any one of items 42-53, wherein said plant growth medium and said biodegradable binder is mould together at high temperature.
55. The BFPGM according to items 54, wherein said high temperature is in the range from 50 °C to 200°C, from 80°C to 200°C or from 100 °C to 200 °C.
56. The BFPGM according to any one of items 42-55, which is in the form of slabs being square or rectangular.
57. The BFPGM according to any one of items 42-55, which is in the form of mats.
58. The BFPGM according to any one of items 42-55, which is in the form of a cylinder, a cone, a frustum of a cone or a frustum of a pyramid.
59. The BFPGM according to any one of items 42-55 or 58, which is a frustum of a cone or a frustum of a pyramid having an indentation or a hole in the largest of the two flat surfaces.
60. The BFPGM according to any one of items 42-59, comprising text, marking, indentation or hole which indicates the intended orientation of said BFPGM when in use for plant growth.
61. The BFPGM according to item 60, wherein said text, marking, indentation or hole is present on one surface which is the intended top surface when in use for plant growth.
62. The BFPGM according to any one of items 42-61, which has a wrapping of biodegradable paper around at least the sides and buttom of said BFPGM.
63. The BFPGM according to any one of items 42-62, wherein the main direction of the fibers is vertical (from top to buttom) when the BFPGM is placed as its intended use for plant growth.
64. The BFPGM according to any one of items 42-62, wherein the direction of the fibers is mixed so as to include about the same amont of horizontal and vertical fibers when the BFPGM is placed as intended for use for plant growth.
65. Process for the manufacture of the plant growth medium as defined in any one of items 1-41, comprising : providing plant fibers, slurrying the plant fibers in an aqueous solution to obtain a slurry, incubating the slurry at a temperature above room temperature, optionally under the action of UV, ozone or enzymes, allowing at least part of the lignin to dissolve or liberate from the plant fibers, draining or filtering the aqueous phase from the slurry of plant fibers to obtain processed fibers, optionally washing the processed fibers and/or removing larger parts, optionally mixing of the processed fibers and the at least one cellulose product, and optionally drying of processed fibers or the mixture of processed fibers and at least one cellulose product to obtain said plant growth medium.
66. Process for the manufacture of the plant growth medium as defined in any one of items 1-41, comprising the consecutive steps :
   a) providing plant fibers,
   b) slurrying the plant fibers in an aqueous solution to obtain a slurry,
   c) incubating the slurry at a temperature above room temperature allowing at least part of the lignin to dissolve or liberate from the the plant fibers, optionally under the action of UV, ozone or enzymes,
   d) draining or filtering the aqueous phase from the slurry of plant fibers to obtain processed fibers,
   e) optionally washing the processed fibers and/or removing larger parts,
   f) optionally mixing of the processed fibers and the at least one cellulose product,
   g) optionally drying of the mixture,
   to obtain said plant growth medium.
67. The process according to item 65 or 66, wherein said incubation of the slurry is at a temperature in the range from 50 °C to 120 °C, in the range from 50 °C to 95 °C or in the range from 60 °C to 90 °C.
68. The process according to any one of items 65-67, comprising perfoming the incubation under the action of UV, ozone or enzymes.
69. The process according to any one of items 65-68, wherein said incubation is for a time sufficient to dissolve or liberate at least 10 % of the lignin in the the plant fibers, such as 20%, 33%, 40%, 50% or 75% of the lignin in the plant fibers.
70. The process according to any one of items 65-69, comprising the drying of the mixture (step g).
71. The process according to any one of items 63-68, wherein the mixing is perfomed using dry matter, i.e. the processed fibers, the at least one cellulose product and optionally the at least one water holding ion-exchanger are all substantially dry components when being mixed.
72. The process according to any one of items 65-71, wherein the at least one water holding ion-exchanger is admixed with the processed fibers and the at least one cellulose product.
73. The process according to item 71 or 72, wherein said mixing is performed by first mixing the processed fibers and the at least one cellulosic product, and subsequently admixing the at least one water holding ion-exchanger.
74. The process according to any one of items 65-73, wherein the processed fibers and the at least one cellulose product are mixed and subsequently heated.
75. The process according to item 74, wherein said heating is to at least 50 °C.
76. A process for the manufacture of the plant growth medium as defined in any one of items 2-41, comprising mixing of the plant fibers and the at least one cellulose product, and subsequently heating the mixture, such as heating the mixture to at least 50 °C.
77. Process for the manufacture of the BFPGM as defined in any one of items 42-64, comprising : preparing a plant growth medium by the process as defined in any one of items 65-76, mixing the plant growth medium with a biodegradable binder, forming the mixture into the 3 dimensional shape of the desired BFPGM and activating the reaction causing the biodegradable binder to transform such as to be able to support said outer shape.
78. The process according to item 77, wherein the reaction is activated by heating the mixture either prior to forming the 3D shape or after forming the 3D shape.
79. Use of the plant growth medium as defined in any one of items 1-41 or the BFPGM as defined in any one of items 42-64 for growing a plant.
80. Use of the plant growth medium as defined in any one of items 1-41 or the BFPGM as defined in any one of items 42-64 in horticulture, agriculture or the consumer market.
81. The use according to item 79 or 80, which is a greenhouse application.
82. The use according to any one of items 79-81, which is for potted plants.
83. The use according to any one of items 79, 80 and 82, which is for free range agriculture.
84. The use according to any one of items 79-83, which is for the growth of vegetables.
85. The use according to any one of items 79-84 wherein the plant growth medium or the BFPGM is for growing plants out of contact with soil prior to the plant and the growth medium being planted in the soil on free country, e.g. in a field.
86. Method for growing plants which comprises the steps:
   a) providing the plant growth medium as defined in any one of items 1-41 or the BFPGM as defined in any one of items 42-64,
   b) sowing seeds and/or placing seedlings on or into said plant growth medium or said BFPGM, and
   c) adding water and nutrients as required for growth of the plants to said plant growth medium or said BFPGM during the growth of said plants.

### Figures

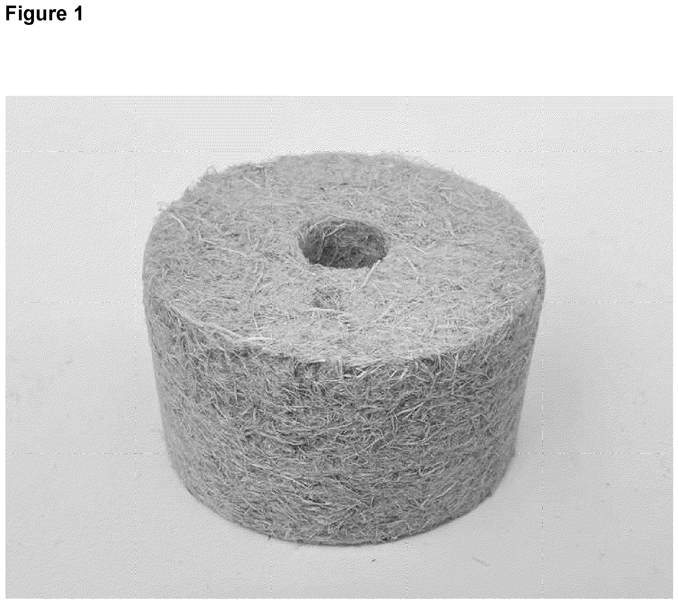

Figure 1. Cylindrical block formed plant growth medium comprising plant fibers and a biodegradable binder which have a hole for a plant.

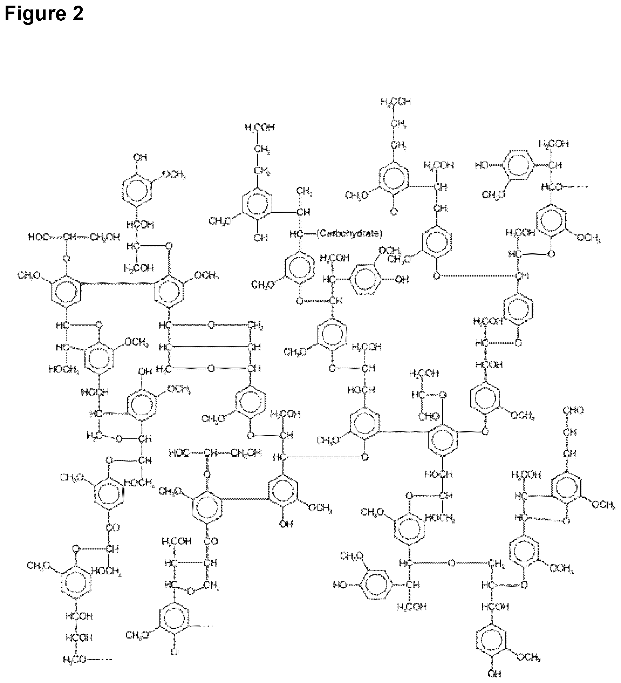

Figure 2. Example of the structure of lignin.
Figure 3. Photo of a block formed plant growth medium shaped as a cylinder with a hole for placing a plant or seedling, and the medium being wrapped in weldable paper.
Figure 4. Comparison of the results from the cress test in a rather poor growth medium (top figure, test 1) and a good growth medium (bottom figure, test 2).

### Detailed description of the invention

Unless specifically defined herein, all technical and scientific terms used have the same meaning as commonly understood by a skilled artisan in the fields of agriculture, hprticulture and hydroponic growth systems.

All methods and materials similar or equivalent to those described herein can be used in the practice or testing of the present invention, with suitable methods and materials being described herein. All publications, patent applications, patents, and other references mentioned herein are incorporated by reference in their entirety. In case of conflict, the present specification, including definitions, will prevail. Further, the materials, methods, and examples are illustrative only and are not intended to be limiting, unless otherwise specified.

The practice of the present invention will employ, unless otherwise indicated, conventional techniques of horticulture, agriculture, wood processing technology, polymer science and plant breeding, which are within the skill of the art. Such techniques are explained fully in the literature in numerous textbooks.

### The plant growth medium

In a first aspect the present invention provides a plant growth medium comprising plant fibers and at least one cellulose product.

In one embodiment the at least one cellulose product is bound to the surface of said plant fibers.

In another embodiment the at least one cellulose product is bound exclusively to the surface of said plant fibers.

In another embodiment the at least one cellulose product is a cellulose, cellulose ether, a cellulose ester or a mixture thereof.

In another embodiment the at least one cellulose product is selected from the group consisting of microfiber cellulose (MFC), powdered cellulose, microcrystalline cellulose (MCC), methyl cellulose (MC), hydroxypropyl cellulose (HPC), hydroxypropylmethyl cellulose (HPMC), carboxymethyl cellulose (CMC) and a mixture thereof.

In another embodiment the at least one cellulose product comprises microfiber cellulose (MFC). In another embodiment the at least one cellulose product is microfiber cellulose (MFC).

In another embodiment the at least one cellulose product comprises carboxymethyl cellulose (CMC). In another embodiment the at least one cellulose product is carboxymethyl cellulose (CMC).

In another embodiment the content of said at least one cellulosic product in the plant growth medium is from 0.01 %w/w to 20 %w/w, from 0.1 %w/w to 20 %w/w, from 0.5 %w/w to 10 %w/w, from 0.5 %w/w to 5 %w/w or from 1.0 %w/w to 10 %w/w.

). Approimately 20-30% of the dry matter in woody plants consists of lignin, thus around 30% in conifers to about 20-25% in hardwoods. Lignin is from Latin, lignum = "wooden substance", "wood". Lignin acts, popularly speaking, as the "concrete" in a cell wall, where cellulose and hemicellulose correspond to "steel reinforcement bars" (or "rebars"). The lignins form a group of phenolics macromolecules that are composed of different monomeric building blocks. It is about solid biopolymers, which become embedded in the plant's cell wall, where they induce the wilting of the cell (lignification).

Lignin is a three-dimensional polymeric molecule which is found in all plants with woody vessels and have been the prerequisite for plants to grow on land. Lignin is a very firm to almost brittle, light brown to dark brown substance. It is optically isotropic, and while UV light is almost completely absorbed, this happens only partially with visible light.

However, lignin is not a uniform substance, but a group of phenolic macromolecules that are composed of different monomeric building blocks. Thereby, through combinations of several similar basic molecules a dense, amorphous mass with a network-like structure is formed. In contrast to the polysaccharides lignin has a significantly lower polarity rendering lignin water-repellent, such that it is insoluble in water and many other solvents. For the same reason, it is much more difficult to degrade through biological processes than other naturally occurring substances.

Lignin is used - when disregarding the use of timber - primarily as a by-product from the paper and pulp industry. Worldwide production is approximately 50 million tonnes of lignin. In this by-product, the remaining lignin and lignin sulphonic acids are found in dissolved form in different process streams from which they can be extracted. The most important application for the two lignin raw materials lies now in energy utilization, but there are other uses for the lignosulfonates that arise from the sulfite method.

In essence, the various technical lignin raw materials can be separated according to their properties, which may have significance for their utilization. The most significant difference lies in the molecular sizes: pure lignin has a molecular weight of 2000-3000 g/mol, while the molecular weight of lignosulfonates reaches 20,000-50,000 g/mol. Organosolv lignin is around 1000-2000 g/mol. Lignosulfonates also have a sulfur content of 4-8% and only a few phenolic hydroxy groups (-OH) compared to 1-1.5% sulfur content and many phenolic hydroxy groups in pure lignin and many phenolic hydroxide ions (OH-) without sulfur content in organosolv lignin.

In the literature, there have been a large number of publications where "lignin" has been used as a plant promoting substance. In all these publications, lignin has been in the form of a residual product extracted from wood by different processes such as for example in paper or pulp production by various chemical, thermal or similar processes and thereby this technical lignin is a modified technical form of the natural lignin, e.g. typically having much lower molar mass.

Technical lignin has been studied for various properties, e.g. as a humus substitute that can be found at the lignin produced by oxidative ammonolysis of modified lignin. The nitrogenous lignin are similar in their structure to humic substances, and they are suitable as depot fertilizers. N-lignin is also suitable for recultivation of slag landscapes from mining.

So, in the literature, technical lignin has been investigated, which has been converted, leached or the like and thereby broken down or built up into something other than the natural lignin in the wood fibers.

In the literature, reference is made to the fact that technical lignin produces various phenols during oxidation which are phytotoxic, which indicates that natural lignin also has that effect.

Against this background, we carried out a large number of experiments to confirm that a reduction of the lignin content in wood fiber-based growth media had a positive effect on plant growth and thus constitutes a superior plant growth medium based on wood fiber which is inexpensive, biodegradable and compatible with climate actions such as reducing the release of carbon dioxide into the atmosphere.

The present invention is based on using intact plant fibers or using plant fibers obtained from mechanical processes and adding a cellulose product and/or subsequently reducing the content of lignin in those plant fibers. For logical reasons, the plant growth medium comprising plant fibers according to the present invention relate to natural lignin or what is left of it following reduction of the lignin content.

In one embodiment the plant growth medium comprises plant fibers having a reduced content of lignin.

In another embodiment the content of lignin in said plant fibers have been reduced after the making of the plant fibers.

In another embodiment the plant growth medium comprises no sphagnum or peat.

In another embodiment the plant fibers have a content of lignin of less than 25.0 %w/w, less than 20 %w/w, less than 15.0 %w/w, less than 10.0 %w/w, less than 8.0 %w/w, less than 5.0 %w/w or less than 2.0 %w/w.

In another embodiment the plant fibers have a content of lignin in the range from 15 %w/w to 25 %w/w, from 12 %w/w to 25 %w/w, from 10 %w/w to 25%w/w, from 15 %w/w to 30 %w/w, from 10 %w/w to 30 %w/w, from 5 %w/w to 20%w/w or from 5 %w/w to 15%w/w.

In another embodiment the plant fibers have a content of lignin which is reduced by 10 % as compared to the plant from where the fibers originate, such as reduced by 20%, 33%, 40%, 50% or 75% as compared to the plant from where the fibers originate.

In another embodiment the content of lignin has been reduced by the use of ultraviolet (UV) light, ozone or enzymes. In another embodiment the content of lignin has been reduced by the use of UV light. In another embodiment the content of lignin has been reduced by the use of ozone. In yet another embodiment the content of lignin has been reduced by the use of enzymes.

In another embodiment the content of lignin has been reduced by a hydrothermal process followed by draining the aqueous phase containing lignin and remnants thereof. In another embodiment the hydrothermal process is an acidic hydrothermal process. In another embodiment the hydrothermal process is an alkaline hydrothermal process. In another embodiment the hydrothermal process comprises heating to a temperature in the range from 50 °C to 100 °C at atmospheric pressure for at least 5 minutes.

In another embodiment the plant fibers having a reduced content of lignin have been flushed with hot water.

In another embodiment the plant growth medium further comprises at least one water holding ion exchange material. In another embodiment the at least one water holding ion-exchange material comprises zeolite, clay minerals, diatomaceous earth or a mixture thereof.

In another embodiment the at least one water holding ion-exchange material is a zeolite.

In another embodiment the at least one water holding ion-exchange material is clay minerals.

In another embodiment the at least one water holding ion-exchange material is diatomaceous earth.

In another embodiment the content of said at least one water holding ion-exchange material is in the range from 0.05 %w/w to 30 %w/w, in the range from 0.5 %w/w to 20 %w/w or in the range from 1 %w/w to 10 %w/w.

In another embodiment the at least one water holding ion-exchange material has an average particle size of less than 3.0 mm, less than 1.0 mm, less than 0.50 mm or less than 0.20 mm.

The plant growth medium of the present invention may be made from plant fibers obtained from different plants. In one embodiment the plant fibers are from an angiosperm or from a gymnosperm. In another embodiment the plant fibers are from a dicot or from a monocot.

In another embodiment the plant fibers are from trees. In another embodiment the plant fibers are from spruce (Picea). In another embodiment the plant fibers are from pine (Pinus).

In another embodiment the plant fibers are from angiosperms.

In another embodiment the plant fibers are from plants selected from the group consisting of hemp, sun flower, rapeseed, corn, wheat and barley.

In another embodiment the plant fibers are obtained from plants by the use of a mechanical process such as tearing, rolling or hammer milling. In another embodiment the plant fibers are obtained by hammer milling.

In another embodiment the plant fibers are from plants without the use of chemical or biochemical processes for disintegrating the plant material into the plant fibers.

In another embodiment the plant fibers are initially obtained from plants without the use of chemical or biochemical processes for disintegrating the plant material into the plant fibers prior to reducing the lignin content of said plant fibers.

### The block formed plant growth medium (BFPGM)

The plant growth medium of the present invention may advantageously be made into a block formed plant growth medium (BFPGM) to make its horticultural and agricultural use more practical and easily automated.

In an aspect the present invention provides a block formed plant growth medium (BFPGM) comprising the plant growth medium of the present invention and a biodegradable binder.

In another embodiment the biodegradable binder exhibits at least 80% biological degradation in 650 days under ASTM D5511 test conditions (filling dump conditions).

In another embodiment the biodegradable binder exhibits at least 50% biological degradation in 980 days under ASTM D6691 test conditions (sea environment).

In another embodiment the biodegradable binder exhibits at least 15% biological degradation in 250 days under ASTM D5210 test conditions (waste water environment).

In another embodiment the biodegradable binder is degraded in nature by hydro-degradation, i.e. a degradation fully decomposing the binder to natural elements such as water, carbon dioxide, methane and humus without leaving traces of the polymer.

In another embodiment the biodegradable binder is a synthetic biodegradation-enhanced fiber comprising a polymer material, one or more biodegradation additives at least partially contained within the polymer material that enhance the biodegradation rate of the polymer material in a biodegradation environment, said biodegradation additives comprising at least one of an aliphatic-aromatic ester, a polylactide, a monosaccharide, an aldohexose and a ketohexose.

In another embodiment the biodegradation additive comprises a monosaccharide.

In another embodiment the biodegradable binder comprises a polymer material which is polyester, such as polyethylene terephthalate.

In another embodiment the biodegradable binder is a synthetic biodegradation-enhanced fiber comprising polyester and a monosaccharide at least partially contained within the polyester.

In another embodiment the synthetic biodegradation-enhanced fiber comprises a silicon coating extending about the polymer material and biodegradation additives.

In another embodiment the polymer material and said biodegradation additives are coupled at high temparatures and extruded to form the synthetic biodegradation-enhanced fiber.

In another embodiment the content of said biodegradable binder is in the range from 0.1 %w/w to 15 %w/w, from 0.1 %w/w to 8 %w/w or from 0.5%w/w to 5 %w/w.

Methods for making fibers that can serve as a biodegradable binder can be found, e.g. in WO2019/136049.

In another embodiment the plant growth medium and said biodegradable binder is mould together at high temperature. In another embodiment the high temperature is in the range from 50 °C to 200 °C, from 80 °C to 200 °C or from 100 °C to 200 °C.

In another embodiment the BFPGM is in the form of slabs being square or rectangular.

In another embodiment the BFPGM is in the form of mats.

In another embodiment the BFPGM is in the form of a cylinder, a cone, a frustum of a cone or a frustum of a pyramid. In another embodiment the BFPGM is a frustum of a cone or a frustum of a pyramid having an indentation or a hole in the largest of the two flat surfaces.

In another embodiment the BFPGM comprises text, marking, indentation or hole which indicates the intended orientation of said BFPGM when in use for plant growth. In another embodiment the text, marking, indentation or hole is present on one surface which is the intended top surface when in use for plant growth.

In another embodiment the BFPGM has a wrapping of biodegradable paper around at least the sides and buttom of said BFPGM.

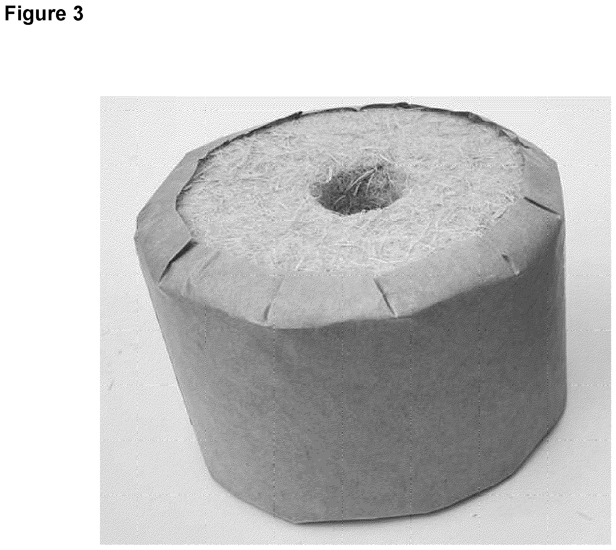

A cylinder formed BFPGM according to the present invention is depicted in Figure 3 where the BFPGM has a hole for placing the plant or seedling, and the BFPGM being wrapped in a weldable paper which is biodegradable.

In another embodiment the main direction of the fibers is vertical (from top to buttom) when the BFPGM is placed as its intended use for plant growth.

In another embodiment the direction of the fibers is mixed so as to include about the same amont of horizontal and vertical fibers when the BFPGM is placed as intended for use for plant growth.

### Processes for the manufacture of the plant growth medium and the BFPGM

In an aspect the present invention provides a process for the manufacture of the plant growth medium as defined above, comprising : providing plant fibers, slurrying the plant fibers in an aqueous solution to obtain a slurry, incubating the slurry at a temperature above room temperature, optionally under the action of UV, ozone or enzymes, allowing at least part of the lignin to dissolve or liberate from the plant fibers, draining or filtering the aqueous phase from the slurry of plant fibers to obtain processed fibers, optionally washing the processed fibers and/or removing larger parts, optionally mixing of the processed fibers and the at least one cellulose product, and optionally drying of processed fibers or the mixture of processed fibers and at least one cellulose product to obtain said plant growth medium.

In another aspect the present invention provides a process for the manufacture of the plant growth medium as defined above, comprising the consecutive steps :
a) providing plant fibers,
b) slurrying the plant fibers in an aqueous solution to obtain a slurry,
c) incubating the slurry at a temperature above room temperature allowing at least part of the lignin to dissolve or liberate from the the plant fibers, optionally under the action of UV, ozone or enzymes,
d) draining or filtering the aqueous phase from the slurry of plant fibers to obtain processed fibers,
e) optionally washing the processed fibers and/or removing larger parts,
f) optionally mixing of the processed fibers and the at least one cellulose product,
g) optionally drying of the mixture,
to obtain said plant growth medium.

In one embodiment the incubation of the slurry is at a temperature in the range from 50 °C to 120 °C, in the range from 50 °C to 95 °C or in the range from 60 °C to 90 °C.

In another embodiment the incubation is performed under the action of UV, ozone or enzymes.

In another embodiment the incubation is for a time sufficient to dissolve or liberate at least 10 % of the lignin in the the plant fibers, such as 20%, 33%, 40%, 50% or 75% of the lignin in the plant fibers.

In another embodiment the process comprises the drying of the mixture (step g).

In another embodiment the mixing is perfomed using dry matter, i.e. the processed fibers, the at least one cellulose product and optionally the at least one water holding ion-exchanger are all substantially dry components when being mixed.

In another embodiment the at least one water holding ion-exchanger is admixed with the processed fibers and the at least one cellulose product.

In another embodiment the mixing is performed by first mixing the processed fibers and the at least one cellulosic product, and subsequently admixing the at least one water holding ion-exchanger.

In another embodiment the processed fibers and the at least one cellulose product are mixed and subsequently heated. In an embodiment the heating is to at least 50 °C.

In an aspect the present invention further provides a process for the manufacture of the plant growth medium as defined above, comprising mixing of the plant fibers and the at least one cellulose product, and subsequently heating the mixture, such as heating the mixture to at least 50 °C.

In an aspect the present invention further provides a process for the manufacture of the BFPGM as defined above, comprising : preparing a plant growth medium by the process as defined above, mixing the plant growth medium with a biodegradable binder, forming the mixture into the 3 dimensional shape of the desired BFPGM and activating the reaction causing the biodegradable binder to transform such as to be able to support said outer shape.

In an embodiment the reaction is activated by heating the mixture either prior to forming the 3D shape or after forming the 3D shape.

### Applications of the plant growth medium and the BFPGM

The plant growth medium and the BFPGM of the present invention may be used for any germination, root formation or plant growth within horticulture as well as agriculture.

In an aspect the present invention provides the use of the plant growth medium as defined above or the BFPGM as defined above for growing a plant.

In another aspect the present invention provides the use of the plant growth medium as defined above or the BFPGM as defined above in horticulture, agriculture or the consumer market.

In one embodiment the use is a greenhouse application.

In another embodiment the use is for potted plants.

In another embodiment the use if for free range agriculture.

In another embodiment the use is for the growth of vegetables.

In another embodiment the plant growth medium or the BFPGM is for growing plants out of contact with soil prior to the plant and the growth medium being planted in the soil on free country, e.g. in a field.

The another aspect the present invention provides a method for growing plants which comprises the steps:
a) providing the plant growth medium as defined herein or the BFPGM as defined herein,
b) sowing seeds and/or placing seedlings on or into said plant growth medium or said BFPGM, and
c) adding water and nutrients as required for growth of the plants to said plant growth medium or said BFPGM during the growth of said plants.

### Definitions

The term "lignin" as used herein is intended to mean the natural lignin as found in plants, e.g. wood as a complex molecule comprising "sugars" and phenolic groups and making up the main structural component of wood giving it its strength. Lignin is hydrophobic and poorly soluble in water. The term lignin as used herein covers the natural form of lignin and not the partially or wholly degraded lignin, such as what is referred to in the literature as technical lignin.

The term "water holding ion exchange material" as used herein is intended to mean an ion exchange material having the ability to hold water in its structure. Water holding ion exchange materials typically have a very large surface area as compared to their weight and they are useful for serving as a water reservoir that can store different ions which are important for plant growth, such as potassium, magnesium and phosphate ions. Non limiting examples of a water holding ion exchange material are zeolite, clay minerals and diatomaceous earth.

The term "zeolite" as used herein is intended to mean the hydrated, crystalline aluminosilicate mineral with a honeycomb microstructure whose structures enclose channels and/or cavities of molecular dimensions approximately 0.3-1.5 nm in diameter. Zeolites may be either natural or synthetic zeolites. Natural zeolites are mostly formed from volcanic and sedimentary rocks such as chabazite, clinoptilolite, and mordenite as found in e.g. deposits throughout the western half of the United States. Synthetic zeolites are prepared through heating of China clay, feldspar, soda ash, and other sources. There are also different types of synthetic zeolites such as zeolite A, zeolite X, zeolite Y, and zeolite P, which can be synthesized from different resources. See e.g. Derbe T. et al., Advances in Materials Science and Engineering (2021), Article ID 6637898, doi.org/10.1155/2021/6637898.

The term "clay minerals" as used herein is intended to mean any of a group of important hydrous aluminum silicates with a layer structure and very small particle size, e.g. (e.g. kaolin, Al₂Si₂O₅(OH)₄). They may contain significant amounts of iron, alkali metals, or alkaline earths. There are three main groups of clay minerals: Kaolinite which includes dickite and nacrite; formed by the decomposition of orthoclase feldspar; Illite which includes glauconite (a green clay sand) and are the commonest clay minerals formed by the decomposition of some micas and feldspars, predominant in marine clays and shales; Smectites or montmorillonites which includes bentonite and vermiculite formed by the alteration of maficigneous rocks rich in Ca and Mg, where weak linkage by cations (e.g. Na+, Ca++) results in high swelling/shrinking potential. Clay and clay mineral typically have a very large surface area per weight of the material.

The term "cellulose product" as used herein is intended to mean a hydrophilic composition comprising cellulose or a cellulose derived product as a substantial part. Non-limiting examples of a cellulose product is various forms of cellulose, cellulose esters and cellulose ethers. Non-limiting examples of a cellulose product is microfiber cellulose (MFC), microcrystalline cellulose (MCC), hydroxypropylmethyl cellulose (HPMC) and carboxymethyl cellulose (CMC). In one embodiment a cellulose product does substantially not comprise any lignin or hemicellulose. Hence, plant or wood as such is not comprised by the term "cellulose product", neither in the form of plant fibers or wood fibers.

Where a numerical limit or range is stated herein, the endpoints are included. Also, all values and sub ranges within a numerical limit or range are specifically included as if explicitly written out.

Having generally described this invention, a further understanding can be obtained by reference to certain specific examples, which are provided herein for purposes of illustration only, and are not intended to be limiting unless otherwise specified.

### Examples

### Test description

### Treatment of the wood fibers

We treated the wood fiber materials to reduce the lignin content by various processes thermally and chemical. In both cases, we saw an effect on plant growth by lowering the lignin content.

In the experiments below, lignin is mainly removed by a thermal process with hot water and subsequently rinsed and cooled before the further process.

In some experiments, we have used MFC to encapsulate lignin instead of removing it. MFC has an area of approx. 800 m2 per gram and is believed to cover lignin in the material, which then does not act phytotoxic.

### Watercress test

All tests have been carried out after a cress test with organic cress seed.

The cress test is a generally recognized tool for testing the phytotoxicity of compost. Phytotoxicity of a compost can be tested using open cress tests, as an indicator of the plants' reactions to the growth media suitability. The open cress test is suitable for testing for visible and rapid reactions to phytotoxicity.

The cress seeds are sown simultaneously in the same amount on the different growth media and at intervals the germination of the cress seeds are documented with a photo. In addition, germination is assessed visually for uniformity, development and growth.

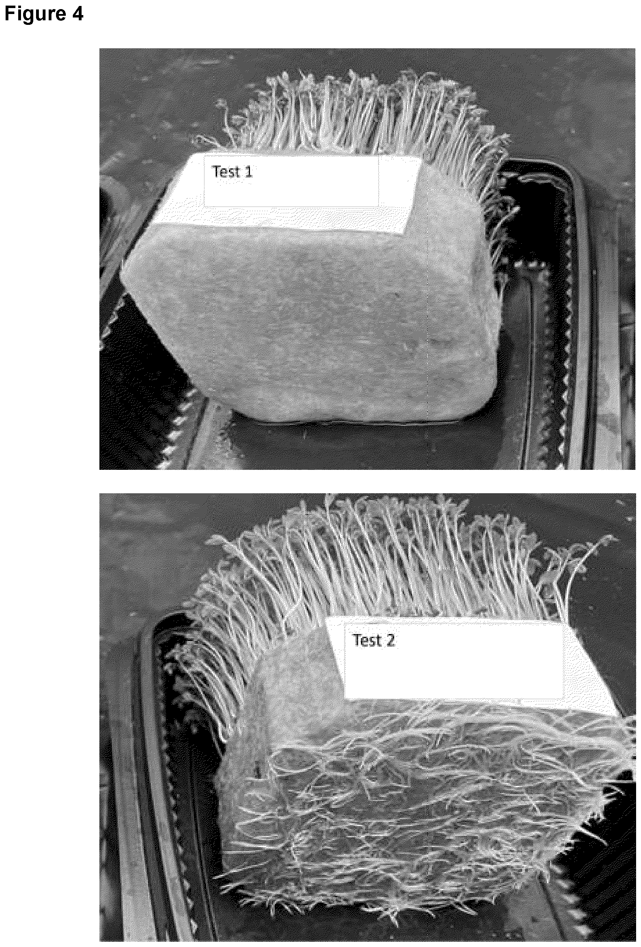

The root growth is documented both with a photo and assessed visually for uniformity and development in growth the medium. Figure 4 shows the results from a watercress test in a rather poor growth medium (top figure, test 1) and a good growth medium (bottom figure, test 2). It is observed that the plants in test 2 grows better than those in test 2, and this is even more visible from the roots growing through the BFPGM.

### Experiments and overall results

The experimental design is that the different treatments are compared to an untreated one on a medium from same production site and with the same fiber structure - size, composition, etc.

In all experiments, the culture media have been shaped as culture blocks tied together with a biodegradable binder. Experiments have been made with different sizes of the bricks to investigate whether they affect the results. There are clearly positive results regardless of the size of the blocks.

The experiments were carried out in greenhouses at organic horticulture.

The experiments were carried out in different seasons to investigate whether there is a difference in terms of temperatures, light incidence and other cultivation parameters. The trials show clear positive results with the treatments under the different growing conditions The experiments are documented by color photos during the experiments. The pictures clearly document a positive impact of the treatments.

In addition, more than 50 tests have been carried out with different softwood fibers from different sources, production sites and produced from different wood species, where sizes, directions, etc. are also investigated.

The results of these tests are that regardless of the type of wood, place of production, type of wood and fiber structure, there was a positive effect on the growth of the treatments (reducing lignin content by heat treatment and/or adding MFC).

The experiments have shown that the heat treatment has resulted in faster root growth through the different blocks.

The effect of MFC-treating the plant growth medium without heat-treating to reduce lignin content has also shown positive root growth but not as good as that from the heat treatment.

### General experimental setting for the five Examples

In all experiments we have listed the days from the day of sowing (day 0) and the subsequent observation day (number of full days since sowing the seeds).

In Examples 1 to 4, we used blocks with the dimensions 10x10x3.4 cm (corresponding to 340 cubic centimeters) while we used a taller block of 10x10x6.2 cm (equivalent to 640 cubic centimeters) in Example 5 to clearly make the differences between the treatments visible.

The fibers in all blocks were crossed, i.e. they were oriented in random directions.

### Example 1

In this experiment with coarse fibres, we examined root growth in percentage in the same growth medium shaped as bricks with two treatments: Untreated and heat treated at 100 °C.

**Table 1. Root growth (%) in coarse fibers following sowing at day 0.**

| Day | Untreated | Heat treated |
|---|---|---|
| 0 | 0 | 0 |
| 2 | 0 | 0 |
| 6 | 60 | 100 |

There was rapid germination and uniformity in the heat-treated brick. In the untreated was the germination uneven and slower with a 'curled expression'. The warm handled grows roots directly through the brick with faster growth. There was full grow through of the roots on day 6 in contrast to that untreated brick.

### Example 2

In this experiment with coarse fiber, we examined root growth in percent by visual assessment in the same growth medium shaped like a block with 2 treatments: untreated and heat treated at 100 ° C.

**Table 2. Root growth (%) in coarse fibers following sowing at day 0.**

| Day | Untreated | Heat treated |
|---|---|---|
| 0 | 0 | 0 |
| 5 | 18 | 45 |
| 11 | 20 | 75 |

The results here were that the non-heat-treated blocks had a slower germination and were uneven root growth compared to heat-treated ones, which germinated uniformly and had a faster start to root growth.

This resulted in the untreated blocks having a much slower growth rate of the block in comparison they traded hot.

### Example 3

In this experiment with fine fibres, we examined root growth in percentage by visual assessment in the same growth medium shaped like a block in two treatments untreated and heat treated at 100 °C

**Table 3. Root growth (%) in fine fibers following sowing at day 0.**

| Day | Untreated | Heat treated |
|---|---|---|
| 0 | 0 | 0 |
| 3 | 5 | 25 |
| 9 | 40 | 85 |

Again, the results showed that the untreated had a start with curled germination and slower root growth.

Root penetration was faster in the heat-treated block with double root penetration on the 9^{th} day.

### Example 4

In this experiment with coarse fibers, we examined the root growth in percent by visual assessment in the same growth medium shaped as a block in two different plant growth media : untreated and heat treated at 100 °C

**Table 4. Root growth (%) in coarse fibers following sowing at day 0.**

| Day | Untreated | Heat treated |
|---|---|---|
| 0 | 0 | 0 |
| 6 | 7 | 25 |
| 9 | 22 | 52 |

Here the results showed that growth in the heat-treated block was again the best in terms of germination, root growth and speed of grow through of the brick.

### Example 5

In this experiment, we investigated root growth in blocks with dimensions 10X10X6.2 cm (corresponding to 620 cubic centimeter), which has a larger growth volume than in the previous experiments. We wanted to evaluate root growth in a higher medium to have a more visible effect of our treatments.

We examined the percentage by visual assessment in the same growth medium shaped like a block using 3 different plant growth media : untreated, added M FC and heat treated at 100 °C.

**Table 5. Root growth (%) in a higher block following sowing at day 0.**

| Observation | Untreated | Added MFC | Heat treatment |
|---|---|---|---|
| | | (no heat treatment) | (no MFC added) |
| 0 | 0 | 0 | 0 |
| 3 | 2 | 10 | 20 |
| 5 | 2 | 25 | 90 |

The results here showed that germination was worst on the untreated block. The block which had been supplied with MFC and the heat-treated block had clearly better germination. By the assessments of the root growth through the block, then MFC addition and the heat treatment were clearly better than the untreated one.

The slower growth in the block, which was fed to the MFC without heat action, is due to the fact that the MFC changes the inner surface of the block, which means that the roots grow better and therefore more inside the block. This has also been observed in other trials with other growth media, as well as in practice in nurseries.

The experiment shows that adding MFC worked almost as good as the heat treatment and in many cases will be suitable as a treatment of wood fiber instead of a heat treatment of the wood fibers.

## Claims

1. Plant growth medium comprising plant fibers having a reduced content of lignin as compared to the plant material from which they are formed.

2. The plant growth medium according to claim 1, wherein said plant fibers have a content of lignin which is reduced by 10 % as compared to the plant from where the fibers originate, such as reduced by 20%, 33%, 40%, 50% or 75% as compared to the plant from where the fibers originate.

3. Plant growth medium comprising plant fibers and at least one cellulose product.

4. The plant growth medium according to any one of claims 1-3, wherein said plant growth medium comprises at least one cellulose product which is bound to the surface of said plant fibers.

5. The plant growth medium according to any one of the preceding claims, wherein said at least one cellulose product is selected from the group consisting of microfiber cellulose (MFC), powdered cellulose, microcrystalline cellulose (MCC), methyl cellulose (MC), hydroxypropyl cellulose (HPC), hydroxypropylmethyl cellulose (HPMC), carboxymethyl cellulose (CMC) and a mixture thereof.

6. The plant growth medium according to any of the preceding claims further comprising at least one water holding ion exchange material.

7. The plant growth medium according to any one of the preceding claims, wherein said plant fibers are from trees, such as from spruce (Picea) or from pine (Pinus).

8. Block formed plant growth medium (BFPGM) comprising the plant growth medium as defined in any one of claims 1-7 and a biodegradable binder.

9. The BFPGM according to claim 8, wherein said biodegradable binder is a synthetic biodegradation-enhanced fiber comprising a polymer material, one or more biodegradation additives at least partially contained within the polymer material that enhance the biodegradation rate of the polymer material in a biodegradation environment, said biodegradation additives comprising at least one of an aliphatic-aromatic ester, a polylactide, a monosaccharide, an aldohexose and a ketohexose.

10. Process for the manufacture of the plant growth medium as defined in any one of claims 1-7, comprising : providing plant fibers, slurrying the plant fibers in an aqueous solution to obtain a slurry, incubating the slurry at a temperature above room temperature, optionally under the action of UV, ozone or enzymes, allowing at least part of the lignin to dissolve or liberate from the plant fibers, draining or filtering the aqueous phase from the slurry of plant fibers to obtain processed fibers, optionally washing the processed fibers and/or removing larger parts, optionally mixing of the processed fibers and the at least one cellulose product, and optionally drying of processed fibers or the mixture of processed fibers and at least one cellulose product to obtain said plant growth medium.

11. Process for the manufacture of the plant growth medium as defined in any one of claims 1-7, comprising the consecutive steps :
a) providing plant fibers,
b) slurrying the plant fibers in an aqueous solution to obtain a slurry,
c) incubating the slurry at a temperature above room temperature allowing at least part of the lignin to dissolve or liberate from the the plant fibers, optionally under the action of UV, ozone or enzymes,
d) draining or filtering the aqueous phase from the slurry of plant fibers to obtain processed fibers,
e) optionally washing the processed fibers and/or removing larger parts,
f) optionally mixing of the processed fibers and the at least one cellulose product,
g) optionally drying of the mixture,
to obtain said plant growth medium.

12. Process for the manufacture of the BFPGM as defined in any one of claims 8-9, comprising : preparing a plant growth medium by the process as defined in claim 10 or 11, mixing the plant growth medium with a biodegradable binder, forming the mixture into the 3 dimensional shape of the desired BFPGM and activating the reaction causing the biodegradable binder to transform such as to be able to support said outer shape.

13. Use of the plant growth medium as defined in any one of claims 1-7 or the BFPGM as defined in claim 8 or 9 for growing a plant.

14. Use of the plant growth medium as defined in any one of claims 1-7 or the BFPGM as defined in claim 8 or 9 in horticulture, agriculture or the consumer market.

15. Method for growing plants which comprises the steps:
a) providing the plant growth medium as defined in any one of claims 1-7 or the BFPGM as defined in claim 8 or 9,
b) sowing seeds and/or placing seedlings on or into said plant growth medium or said BFPGM, and
c) adding water and nutrients as required for growth of the plants to said plant growth medium or said BFPGM during the growth of said plants.
